# EUROPEAN PATENT SPECIFICATION

(11) **EP 1 885 048 B1**
(45) Date of publication and mention of the grant of the patent: **02.07.2014**
(21) Application number: 07112701.3
(22) Date of filing: 18.07.2007
(51) Int. Cl.: H02K 21/22

(54) **Electric generator with internal rotor for small-dimension, high performance internal combustion engines.**
Elektrischer Generator mit internem Rotor für kleine Hochleistungs-Verbrennungsmotoren
Générateur électrique avec rotor interne pour moteurs à combustion haute performance, de petite taille

(30) Priority: 27.07.2006 IT VE20060050
(43) Date of publication of application: 06.02.2008
(73) Proprietor: IDM S.R.L., 31044 Montebelluna (IT)
(72) Inventor: Imoli, Dante, 31044 Montebelluna (IT); Bordin, Mauro, 31044 Montebelluna (IT)
(74) Representative: Piovesana, Paolo

(56) References cited:
- EP-A1- 1 447 541
- WO-A-2006/137498
- FR-A1- 2 708 802
- US-A- 3 531 670
- US-A- 4 617 726
- US-A- 4 628 891
- US-A- 4 633 113
- US-A- 5 237 737
- US-A- 6 137 199

## Description

The present invention relates to an electric generator with internal rotor for small-dimension, high performance internal combustion engines.

Electric generators for small-dimension, high performance internal combustion engines are known. These are generally used in competition mini-motors, in go-karts, in ultra-light aircraft, and generally in all those cases in which the engine must be of minimum weight and hence of low mechanical inertia, to achieve rapid vehicle response to engine operating variations.

Engines are also known requiring a rotor and stator of small outer diameter, but with the rotor presenting sufficient inertia to ensure good engine rotation stability at minimum rotational speeds.

Known electric generators for this use are preferably of internal rotor type, i.e. they are provided with a rotor which is directly fixed to the end of the drive shaft and is surrounded by a stator.

These known generators generally comprise a ring of ferromagnetic material in which a frusto-conical or cylindrical axial cavity is provided to be coupled to the correspondingly shaped end of the drive shaft, and a plurality of magnets applied to the periphery of this ring and arranged to generate a magnetic flux, the lines of force of which are closed via the stator ferromagnetic ring and core, and with the rotor rotation they generate within the stator windings the electrical energy to be then used to ignite the engine.

A drawback of these known electric generators with internal rotor is that the high centrifugal forces generated within the magnets due to the high rotational speed of the engine require these to be securely fixed to the ring of ferromagnetic material. This is generally achieved by embedding this ring of ferromagnetic material and the magnets into a mass of diecast aluminium.

However diecasting not only requires moulds which are generally costly in order to prevent sharp edges or burrs forming in the diecast part, but also requires high temperatures which in the case of rare earth magnets, i.e. those most widely used, could lead to their demagnetization. Because of this, it is generally preferred to apply them to the ferromagnetic ring before their magnetization and to magnetize them only afterwards, with an additional operation which affects the final cost of the generator.

Another drawback is that the diecasting operation can involve a relative movement between the magnet and ring, with possible aluminium infiltrations between them, causing consequent increase in the magnetic reluctance of the circuit and reduction of engine performance.

Another drawback is that because of dimensional requirements, the diecast aluminium mass incorporating the magnets is generally limited, making it problematic to fix to it, for example by screws, an external structure such as the support structure for the gears of the engine starting system, the cooling system fans, or an additional inertial mass. This problem is linked to the difficulty of applying the screws exactly between the magnets, and always involves mechanical sealing problems. To prevent this it should be possible to embed the ferromagnetic ring and magnets in a form corresponding to that of the structure required by the client. This would also eliminate the need to apply this structure to the rotor, but would involve differentiated production of the rotor on the basis of client requirements, and at the same time the formation of more than one diecasting mould generally larger and more complex than that for producing the traditional rotor.

US 4628891 describes a generator for internal combustion engines with a rotor constituted by an iron cup externally coupled to the basis of the drive shaft and housing inside a signal generator cooperating with a timing portion, obtained by embossing, on the inner surface of the iron cap.

US 4617727 describes an electric generator foreseen to work at high rotational speed. It comprises a rotor realized in aluminium melting and having a cylindrical portion levelled on its side surface in order to create even housings where to apply the magnets.

US 4633113 discloses a permanent magnet rotor for use in a dynamo electric machine comprising: a rotor hub, a plurality of circumferentially spaced magnets on said hub, filler material disposed between adjacent ones of said magnets and axially spaced opposed side plates on said hub sandwiching said magnets and said filler material.

All these drawbacks are eliminated according to the invention by an electric generator with internal rotor for small-dimension, high performance internal combustion engines as described in claim 1.

Two preferred embodiments of the present invention are further clarified hereinafter with reference to the accompanying drawings, in which:

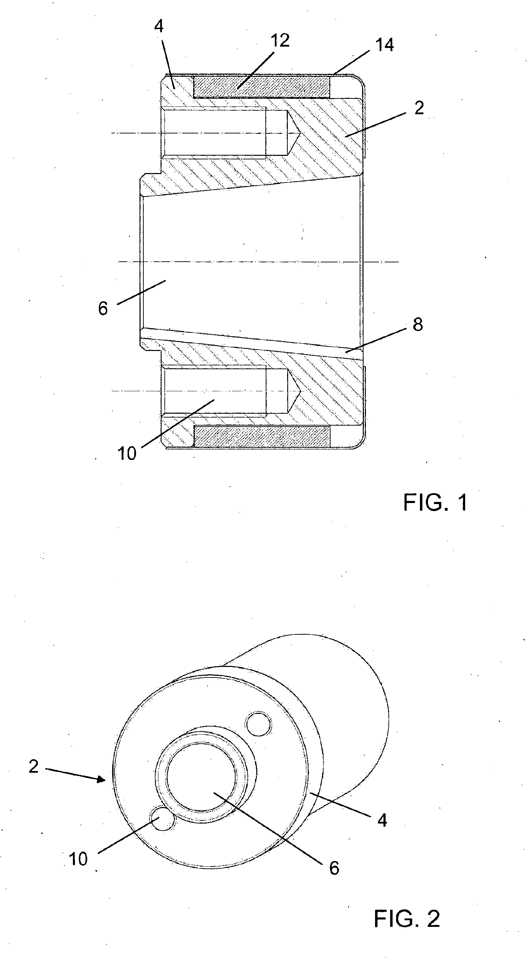

Figure 1 is an axial section through the internal rotor of an electric generator of the invention,
Figure 2 is a perspective view of its ring of ferromagnetic material before application of the magnets,
Figure 3 shows the step of applying the magnets to said ring,
Figure 4 shows the ring with the magnets already applied thereto,
Figure 5 shows the step of applying the external cap to the ring already provided with magnets, and
Figure 6 is an axial section through a different embodiment of the internal rotor of an electric generator according to the invention.

As can be seen from the figures, the electric generator of the invention is of the type with the internal rotor directly applicable to the shaft (not shown) of a small-dimension, high performance internal combustion engine.

The rotor comprises a ring 2 of ferromagnetic material, provided with an outer circumferential flange 4 and a frusto-conical cavity 6 for coupling to a complementary end of the drive shaft. Said flange 4 is preferably located in proximity to that circumferential edge of the ring 2 distant from the drive shaft.

To ensure correct angular positioning of the rotor about the drive shaft, a seat 8 is provided in the ring 2 for a key.

The ring 2 is produced by lathe turning, the production hence being simple and not requiring particular tools.

Two threaded holes 10 are also provided in the ring 2 for applying extractors to enable the rotor to be removed from the drive shaft or for applying possible external structures of the engine pull-starting system or an engine cooling fan.

The rotor of the generator of the invention also comprises a plurality of permanent magnets 12, preferably formed of rare earths and having a thickness of about 2 mm, and in any event equal to the height of the flange 4.

These magnets are glued in the correct position to the cylindrical surface of the ring 2, with an edge adhering to the flange 4 thereof, the entire assembly being covered by a cylindrical cap 14 made of a magnetic material, preferably stainless steel, and provided in its flat portion with a central aperture, which leaves the frusto-conical cavity 6 free for insertion of the corresponding end of the drive shaft.

To form the rotor of the generator of the invention, a layer of adhesive is applied to the cylindrical surface of the ring 2, then the magnets 12 are applied. To correctly apply these, a positioner 16 is used provided with apertures for housing the individual magnets, which are hence maintained angularly spaced apart. The angular position of the positioner 16 on the shaft 2 can be easily established, preferably by utilizing the seat 8 used for the coupling key between the drive shaft and rotor.

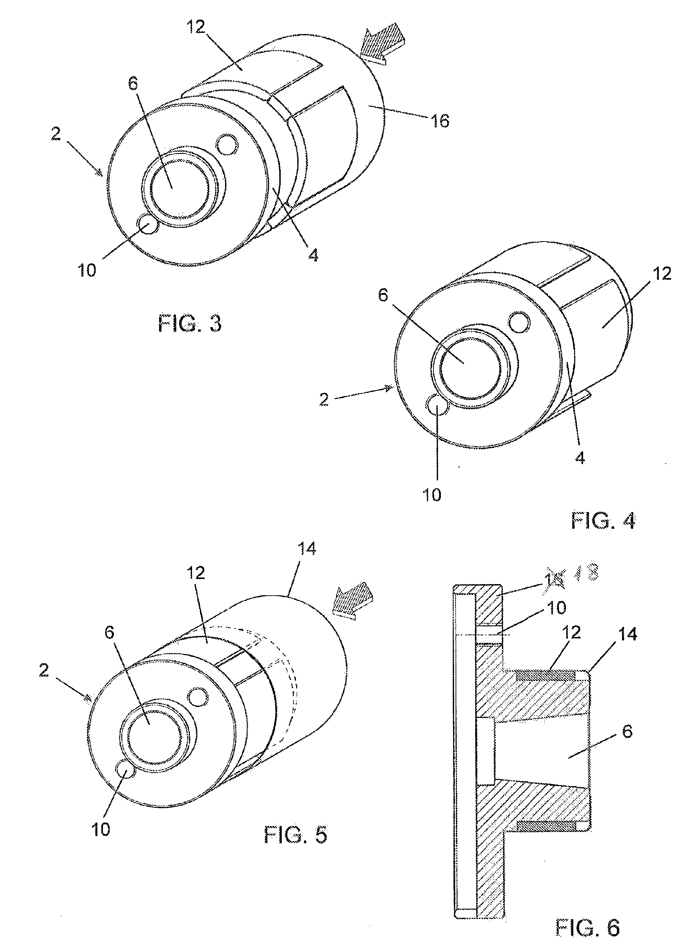

After the positioner 16 with the magnets 12 has been mounted on the ring 2, it is removed whereas the magnets 12 remain securely positioned on the ring (see Figure 4).

The cylindrical cap 14 is then mounted on the shaft so that its lateral surface simultaneously encloses the magnets 12 and the outer surface of the flange 4. Said cap 14 is fixed securely to the shaft 2 preferably by welding.

If the engine is to be pull-started, the relative structure can be fixed to the ring 2 by screws inserted through the holes 10, or by forming the ring 2 by turning it in one piece with the pull-starting structure 18 (see Figure 6).

In the illustrated examples the rotor always comprises a frusto-conical cavity for coupling to the frusto-conical end of the drive shaft. The drive shaft can however be made completely cylindrical so that the ferromagnetic ring will have a cylindrical cavity.

Moreover, in the illustrated examples the magnets 12 have a cross-section in the form of a sector of a circular chamber and are maintained adhering to a corresponding cylindrical potion of the ring 2 by the cylindrical surface of the cap 14. The magnets 12, could also be maintained adhering to the ring 2 by a simple annular band extending externally about them.

From the aforegoing it is apparent that the electric generator of the invention is considerably more advantageous than traditional electric generators with an internal rotor, and in particular:
- it enables the ferromagnetic ring to be produced by simple lathe turning, hence eliminating the costly equipment involved in diecasting, and the scrap which diecasting produces,
- it eliminates all the problems present in magnets of the traditional known systems related to the stresses transmitted thereto by centrifugal force,
- it enables the ferromagnetic ring and the overlying structure normally applied to it to be produced in one piece,
- it enables rotors intended for different clients to be personalized, without different moulds for individual clients; in particular, because of the simple construction of the positioner, it is extremely easy and economical to control the angular position of the moment of spark generation and hence satisfy different client requirements,
- it enables the ferromagnetic ring to be produced without a frusto-conical cavity, and be directly butt-fitted to the drive shaft, which hence does not require to be of frusto-conical shape for coupling to the rotor,
- it enables the ferromagnetic ring to be produced with a frusto-conical cavity of maximum inner diameter compatible with that of traditional internal combustion engines and hence enable the electric generator of the invention to be applied to already existing engines.

## Claims

1. An electric generator with internal rotor for small-dimension, high performance internal combustion engines, in which said rotor comprises a plurality of magnets (12) and applied to the outer cylindrical surface of a ring (2) of ferromagnetic material applicable to the end of the shaft of said engine,
**characterised in that**
said ring (2) is provided with a circumferential flange (4) and is produced by lathe-turning; said circumferential flange (4) is integral with said ring (2) and obtained in proximity to that circumferential edge of said ring (2) distant from said shaft; whereby said magnets (12) rest on said circumferential flange (4):
and **in that** the outer cylindrical surface of said magnets (12) being positioned on a single cylindrical surface, having a radius equal to the radius of the outer surface of said circumferential flange (4), said magnets (12) being maintained adhering to said ring (2) by an annular band (14) of non-ferromagnetic material, which adheres simultaneously to said magnets (12) and to said circumferential flange (4).

2. An electric generator as claimed in claim 1, **characterised in that** said annular band (14) forms part of a cap which is provided with a flat base and is drawn axially over said ring (2) on which said magnets (12) have already been positioned, until said flat base adheres to the corresponding base of said ring (2).

3. An electric generator as claimed in claim 1, **characterised in that** the ring (2) axially comprises a frusto-conical cavity (6) complementary to the profiled end of the shaft of the engine, to which said generator is to be applied.

4. An electric generator as claimed in claim 1, **characterised in that** the ring (2) axially comprises a cylindrical cavity for coupling to the cylindrical end of the shaft of the engine, to which said generator is to be applied.

5. An electric generator as claimed in claim 1, **characterised in that** a plurality of holes (10) are provided in the ring (2) to engage screws for fixing an external member.

6. An electric generator as claimed in claim 1, **characterised in that** an adhesive film is interposed between said magnets (12) and the ring (2) on the mutual contact surface.

7. An electric generator as claimed in claim 1, **characterised by** comprising a structure (18) provided for pull-starting the engine and forming one piece with said ring (2).

## Patentansprüche

1. Elektrischer Generator mit einem internen Rotor für kleindimensionierte Hochleistungs-Brennkraftmaschinen, wobei der Rotor mehrere Magneten (12) umfasst, die an der äußeren zylindrischen Oberfläche eines Rings (2) aus ferromagnetischem Material, der an dem Ende der Welle der Kraftmaschine angebracht werden kann, angebracht sind,
**dadurch gekennzeichnet, dass**
der Ring (2) mit einem Umfangsflansch (4) versehen ist und durch Drehen hergestellt wird; wobei der Umfangsflansch (4) mit dem Ring (2) einteilig ausgebildet ist und in der Nähe des Umfangsrandes des Rings (2) entfernt von der Welle erstellt ist; wodurch die Magneten (12) auf dem Umfangsflansch (4) aufliegen:
und dass die äußere zylindrische Oberfläche der Magneten (12) auf einer einzelnen zylindrischen Oberfläche positioniert ist, die einen Radius besitzt,
der gleich dem Radius der äußeren Oberfläche des Umfangsflansches (4) ist,
wobei die Magneten (12) durch ein Ringband (14) aus nichtferromagnetischem Material an dem Ring (2) befestigt gehalten werden, das gleichzeitig an den Magneten (12) und dem Umfangsflansch (4) anhaftet.

2. Elektrischer Generator nach Anspruch 1, **dadurch gekennzeichnet, dass** das Ringband (14) einen Teil einer Kappe bildet, die mit einer flachen Basis versehen ist und axial über den Ring (2) gezogen wird, auf dem die Magneten (12) bereits positioniert worden sind, bis die flache Basis an der entsprechenden Basis des Rings (2) anhaftet.

3. Elektrischer Generator nach Anspruch 1, **dadurch gekennzeichnet, dass** der Ring (2) axial eine kegelstumpfförmige Vertiefung (6) umfasst, die komplementär zu dem profilierten Ende der Welle der Kraftmaschine ist, an der der Generator angebracht werden soll.

4. Elektrischer Generator nach Anspruch 1, **dadurch gekennzeichnet, dass** der Ring (2) axial eine zylindrische Vertiefung zum Ankoppeln an dem zylindrischen Ende der Welle der Kraftmaschine umfasst, an der der Generator angebracht werden soll.

5. Elektrischer Generator nach Anspruch 1, **dadurch gekennzeichnet, dass** mehrere Löcher (10) in dem Ring (2) vorgesehen sind, um mit Schrauben in Eingriff zu gelangen, um ein externes Element zu befestigen.

6. Elektrischer Generator nach Anspruch 1, **dadurch gekennzeichnet, dass** ein Haftfilm zwischen den Magneten (12) und dem Ring (2) auf der gemeinsamen Kontaktfläche eingefügt ist.

7. Elektrischer Generator nach Anspruch 1, **dadurch gekennzeichnet, dass** er eine Struktur (18) umfasst, die zum Seilzugstarten der Kraftmaschine vorgesehen ist und ein Teil mit dem Ring (2) bildet.

## Revendications

1. Générateur électrique avec rotor interne pour moteurs à combustion interne haute performance de petite taille, dans lequel ledit rotor comprend une pluralité d'aimants (12) et est appliqué à la surface cylindrique extérieure d'une bague (2) de matériau ferromagnétique applicable à l'extrémité de l'arbre dudit moteur;
**caractérisé en ce que** :
ladite bague (2) est pourvue d'une bride circonférentielle (4) et est produite par rotation sur tour; ladite bride circonférentielle (4) faisant intégralement partie de ladite bague (2) et étant obtenue à proximité du bord circonférentiel de ladite bague (2) se trouvant à distance dudit arbre; lesdits aimants (12) reposant sur ladite bride circonférentielle (4); et
la surface cylindrique extérieure desdits aimants (12) est positionnée sur une surface cylindrique unique ayant un rayon égal au rayon de la surface extérieure de ladite bride circonférentielle (4), lesdits aimants (12) étant maintenus de façon à adhérer à ladite bague (2) par le biais d'une bande annulaire (14) de matériau non ferromagnétique adhérant simultanément auxdits aimants (12) et à ladite bride circonférentielle (4).

2. Générateur électrique selon la revendication 1, **caractérisé en ce que** ladite bande annulaire (14) fait partie d'un cache pourvu d'une base plate et tiré axialement au-dessus de ladite bague (2) sur laquelle lesdits aimants (12) ont déjà été positionnés, jusqu'à ce que ladite base plate adhère à la base correspondante de ladite bague (2).

3. Générateur électrique selon la revendication 1, **caractérisé en ce que** la bague (2) comprend axialement une cavité tronconique (6) complémentaire à l'extrémité de profilé de l'arbre du moteur auquel ledit générateur doit être appliqué.

4. Générateur électrique selon la revendication 1, **caractérisé en ce que** la bague (2) comprend axialement une cavité cylindrique à coupler à l'extrémité cylindrique de l'arbre du moteur auquel ledit générateur doit être appliqué.

5. Générateur électrique selon la revendication 1 , **caractérisé en ce qu'**une pluralité de trous (10) est prévue dans la bague (2) afin d'engrener les vis servant à fixer un élément externe.

6. Générateur électrique selon la revendication 1, **caractérisé en ce qu'**un film adhésif est interposé entre lesdits aimants (12) et la bague (2) sur la surface de contact mutuelle.

7. Générateur électrique selon la revendication 1, **caractérisé en ce qu'**il comprend une structure (18) prévue pour démarrer le moteur à l'aide du lanceur manuel et former une pièce unique avec ladite bague (2).
